# EUROPEAN PATENT APPLICATION

(11) **EP 3 135 646 A1**
(43) Date of publication of application: **01.03.2017**
(21) Application number: 15183048.6
(22) Date of filing: 28.08.2015
(51) Int. Cl.: C03C 25/24, C03C 25/32, C08H 8/00, C08L 5/00, D04H 1/4209, D04H 1/60, E04B 1/76

(54) **SOLID STATE BINDER**

(71) Applicant: Rockwool International A/S, 2640 Hedehusene (DK)
(72) Inventor: HANSEN, Erling Lennart, 2830 Virum (DK); HJELMGAARD, Thomas, 3480 Fredensborg (DK)
(74) Representative: Letzelter, Felix Phillip

(57) **Abstract**

The present invention is directed to a solid state binder composition, wherein the binder comprises a component (i) in form of one or more compounds selected from compounds of the formula, and any salts thereof, such as ammonium salts and/or amine salts thereof: 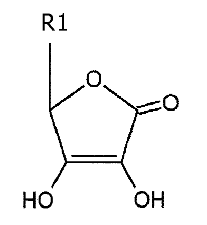 in which R1 corresponds to H, alkyl, monohydroxyalkyl, dihydroxyalkyl, polyhydroxyalkyl, alkylene, alkoxy, amine; compounds of the formula, and any salts thereof, such as ammonium salts and/or amine salts thereof: 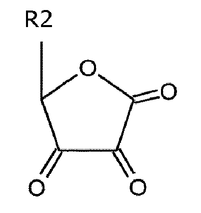 in which R2 corresponds to H, alkyl, monohydroxyalkyl, dihydroxyalkyl, polyhydroxyalkyl, alkylene, alkoxy, amine; a component (ii) in the form of one or more carbohydrates.

## Description

### Field of the Invention

The present invention relates to a binder for mineral fibre products, a method of producing a bonded mineral fibre product using said binder, and a mineral fibre product comprising mineral fibres in contact with the cured binder.

### Background of the Invention

Mineral wool products (also termed mineral fibre products) generally comprise man-made vitreous fibres (MMVF) such as, e.g., glass fibres, ceramic fibres, basalt fibres, slag fibres, mineral fibres and stone fibres (rock fibres), which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process.

The binder material may be applied to the mineral fibres immediately after the fibres are formed. Alternatively the binder material is applied to the mineral fibres in an off-line process separate from the fibre forming process. The binder material in the latter case is traditionally a solid-state binder which is not in a diluted aqueous solution. Such binders are referred to as dry binders.

Mineral fibre products with dry binders are formed by mixing the mineral fibres and the binder material to form a mixture and applying heat and pressure to the mixture in a plate press apparatus to provide a cured mineral fibre product.

A conventional dry binder material is a phenol-formaldehyde resin with a hardener material. Other binders are being developed to avoid the emission of formaldehyde.

Since some of the starting materials used in the production of the known binders are rather expensive chemicals, there is an ongoing need to provide formaldehyde free binders which are economically produced and at the same time show good bonding properties for producing a bonded mineral fibre product.

A further effect in connection with previously known binder compositions from mineral fibres is that at least the majority of the starting materials used for the productions of these binders stem from fossil fuels. There is an ongoing trend of consumers to prefer products that are at least partly produced from renewable materials and there is therefore a need to provide binders for mineral wool which are at least partly produced from renewable materials.

Further, there is an ongoing need to provide binders for mineral wool which enable the production of mineral wool products having good long term mechanical properties.

### Summary of the Invention

Accordingly, it was an object of the present invention to provide a binder composition, which is particularly suitable for bonding mineral fibres, is economically produced, has a good storability, shows good properties for bonding mineral fibre products and is including renewable materials as starting products.

In accordance with a first aspect of the present invention, there is provided a solid state binder composition, wherein the binder comprises a component (i) in form of one or more compounds selected from compounds of the formula, and any salts thereof, such as ammonium salts and/or amines salts thereof: 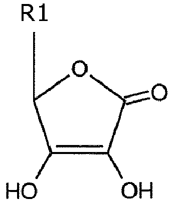 in which R1 corresponds to H, alkyl, monohydroxyalkyl, dihydroxyalkyl, polyhydroxyalkyl, alkylene, alkoxy, amine;
compounds of the formula, and any salts thereof, such as ammonium salts and/or amines salts thereof: 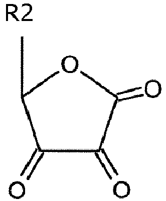 in which R2 corresponds to H, alkyl, monohydroxyalkyl, dihydroxyalkyl, polyhydroxyalkyl, alkylene, alkoxy, amine;
a component (ii) in the form of one or more carbohydrates.

In accordance with a second aspect of the present invention, there is provided a method of producing a bonded mineral fibre product which comprises the steps of contacting the mineral fibres with the binder composition defined above and curing the binder composition.

In accordance with a third aspect of the present invention, there is provided a mineral fibre product comprising mineral fibres in contact with the cured binder composition defined above.

The present inventors have surprisingly found that it is possible to prepare a binder composition for mineral fibres that is based on the combination of the components (i) and (ii) defined above. It is highly surprising that by the combination of these two components, binder compositions can be prepared which are suitable for bonding mineral fibres. Both these components stem from biomass and are non-toxic and easy to handle. At the same time, both these components have a comparatively low price. The combination of the low price aspect and the stemming from renewable resources aspect is particularly remarkable, since "biomaterials" are often more expensive than conventional materials.

It is further surprising that a binder composition based on the combination of a carbohydrate component and the component (i) can be used as a solid state binder, i.e. that it is not necessary to bring this binder composition into an aqueous form in order to apply it to the mineral fibres

At the same time, the binders according to the present invention show excellent properties when used for binding mineral fibres. The mechanical strength has an unexpected high level when subjected to ageing conditions.

As can be seen from the experimental results documented in the examples below, the binder compositions according to the present invention show excellent properties when used as a binder for mineral wool.

The reaction loss from curing achieved with binders according to aspects of the present invention is on the same level or higher than the reaction loss for reference binder. However, unlike the binders according to the present invention, the reference binder needs a pre-reaction for the preparation with associated reaction losses.

### Description of the Preferred Embodiments

The binder composition according to the present invention comprises:
a solid state binder composition, wherein the binder comprises a component (i) in form of one or more compounds selected from compounds of the formula, and any salts thereof, such as ammonium salts and/or amine salts thereof: 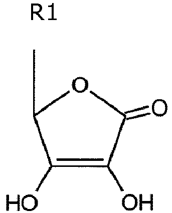 in which R1 corresponds to H, alkyl, monohydroxyalkyl, dihydroxyalkyl, polyhydroxyalkyl, alkylene, alkoxy, amine;
   compounds of the formula, and any salts thereof, such as ammonium salts and/or amines salts thereof: 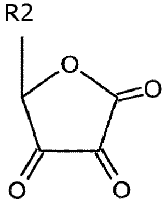 in which R2 corresponds to H, alkyl, monohydroxyalkyl, dihydroxyalkyl, polyhydroxyalkyl, alkylene, alkoxy, amine;
a component (ii) in the form of one or more carbohydrates.

Preferably, the binders according to the present invention are formaldehyde-free. For the purpose of the present application, the term "formaldehyde free" is defined to characterise a mineral wool product where the emission is below 8µg/m²/h of formaldehyde from the mineral wool product, preferably below 5µg/m²/h, most preferably below 3 µg/m²/h. Preferably the test is carried out in accordance with ISO 16000 for testing aldehyde emissions.

Preferably the binder composition does not contain added formaldehyde.

In a preferred embodiment, the solid state binder composition according to the present invention has a water content, calculated as the weight of water in relation to the weight of the total solid state binder, of ≤ 30 %, in particular ≤ 25 %, more preferably ≤ 10 %.

The water content in the solid state binder can be determined based on the weight of water that evaporates at 105 °C in 1 hour at ambient pressure from the binder.

Preferably, 50 wt. % of the components of the solid state binder has a particle size of less than 500 µ, such as less than 200 µ, such as less than 100 µ and more than 10 µ, such as more than 20 µ, such as more than 25 µ.

The definition of the particle size is carried out by applying the binder to a screen for which the mesh width is the particle size to determined, e.g. 200 µ. The particles recovered after the screening thus has a particle size of less than or equal to 200 µ. Thereafter, the wt. % screened can be determined.

In one embodiment the solid state binder composition is able to flow out of a model silo in a mass flow pattern, said model silo having stainless steel walls with a circular hopper, a hopper angle of 30°, and a hopper opening diameter of 20 cm.

A suitable test for determining whether a sample of binder is "free-flowing" is to determine whether the binder is able to flow out of a standardised hopper in a mass flow pattern. The term "mass flow" is known in the art of silo design and refers to the fact that the whole contents of a silo is in movement when product is withdrawn from the bottom of the silo, i.e. the "first in - first out" principle applies to the flow, which is regular and easily controllable. A less desirable flow pattern is "Core flow" or "funnel flow", where the product flows through the core of the silo, so that stagnant zones where product is at rest are found along the wall areas of the silo. The presence of mass flow depends on the internal friction of the product, the wall friction, the hopper shape, the hopper angle and the size of the hopper opening. For a given hopper, the "mass flow angle", which is the angle of the hopper (to the vertical) where mass flow can still occur, may be calculated (when the internal friction and wall friction are known) or determined empirically. At angles greater than the mass flow angle, i.e. less steep hoppers, funnel flow will occur.

To test the flow properties of a sample of binder, a model silo having stainless steel walls with a round hopper, a hopper angle of 30°, and a hopper opening diameter of 20 cm may be employed. For testing, the silo is filled to a minimum fill level of 30 cm above the transition from the silo to the hopper, and a maximum fill level of not more than 3 m. When filling a completely empty silo, a small quantity of the binder (e.g. about 5 litres) should be withdrawn once the fill level reaches the transition, so as to avoid a "bridging" effect caused by binder at the bottom of the silo being subjected to a higher pressure. Product should be withdrawn evenly over the entire area of the opening. Using such a standard hopper, binder is defined as "free-flowing" if it is able to flow out of the hopper in a mass flow pattern. Non-free flowing binder, on the other hand, will - if it is able to flow out of the hopper at all - flow in a funnel flow pattern. The flow pattern in any given case can readily be determined by visual observation. Preferably, the free-flowing binder also flow in a mass flow pattern using the same type of hopper and the same procedure, but with a hopper opening diameter of 15 cm.

### Component (i) of the binder

Component (i) of the binder is in form of one or more compounds selected from compounds of the formula, and any salts thereof, such as ammonium salts and/or amine salts thereof: 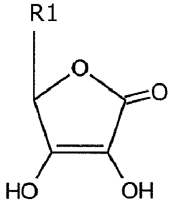 in which R1 corresponds to H, alkyl, monohydroxyalkyl, dihydroxyalkyl, polyhydroxyalkyl, alkylene, alkoxy, amine;
compounds of the formula, and any salts thereof, such as ammonium salts and/or amine salts thereof: 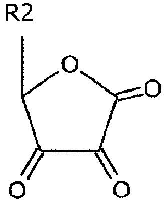 in which R2 corresponds to H, alkyl, monohydroxyalkyl, dihydroxyalkyl, polyhydroxyalkyl, alkylene, alkoxy, amine.

Preferably, alkyl is C₁-C₁₀ alkyl.
Preferably, monohydroxyalkyl is monohydroxy C₁-C₁₀ alkyl.
Preferably, dihydroxyalkyl is dihydroxy C₁-C₁₀ alkyl.
Preferably, polyhydroxyalkyl is polyhydroxy C₁-C₁₀ alkyl.
Preferably, alkylene is alkylene C₁-C₁₀ alkyl.
Preferably, alkoxy is alkoxy C₁-C₁₀ alkyl.

Preferably, component (i) is selected from the group of L-ascorbic acid, D-isoascorbic acid, 5,6-isopropylidene ascorbic acid, dehydroascorbic acid and/or any salt of the compounds, preferably ammonium salts and/or amine salts and/or calcium, sodium, potassium, magnesium or iron salts.

Ascorbic acid, or vitamin C, is a non-toxic, naturally occurring organic compound with antioxidant properties, which can be produced from biomass. Ascorbic acid and its derivatives are therefore a product which is produced from renewable sources and can at the same time be obtained at a comparatively low price. The present inventors have surprisingly found that ascorbic acid or its derivatives can be used as a basis for a binder composition for mineral fibres.

Ascorbic acid, or vitamin C, is a non-toxic, naturally occurring organic compound with antioxidant properties. Industrially, ascorbic acid can for example be obtained by fermentation of glucose. The core structure of ascorbic acid contains a unique five-membered ring, a y-lactone, containing an enediol. Ascorbic acid can thus be classified as a 3,4-dihydroxy-furan-2-one.

Even though ascorbic acid does not contain a carboxylic acid functionality, the 3-hydroxy group is reasonably acidic (pKa = 4.04) since the resulting ascorbate anion is stabilized by charge delocalization.

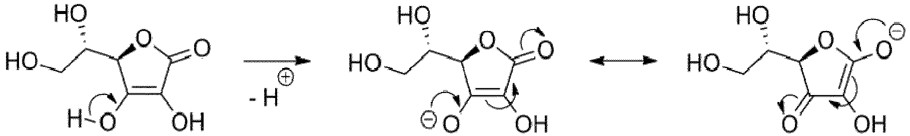

In a further preferred embodiment, component (i) is in form of one or more of ammonium salts, piperazinium salts, salts of polyamines such as hexadimethylenediamine salts, m-xylylenediamine salts, diethylenetriamine salts, triethylenetetramine salts, tetraethylenepentamine salts, and/or monoethanolamine salts, diethanolamine salts and/or triethanolamine salts.

### Component (ii) of the binder

Component (ii) is in the form of one or more carbohydrates.

Starch may be used as a raw material for various carbohydrates such as glucose syrups and dextrose. Depending on the reaction conditions employed in the hydrolysis of starch, a variety of mixtures of dextrose and intermediates is obtained which may be characterized by their DE number. DE is an abbreviation for Dextrose Equivalent and is defined as the content of reducing sugars, determined by the method specified in International Standard ISO 5377-1981 (E).

This method measures reducing end groups and attaches a DE of 100 to pure dextrose and a DE of 0 to pure starch.

In a preferred embodiment, the carbohydrate is selected from sucrose, reducing sugars, in particular dextrose, polycarbohydrates, and mixtures thereof, preferably dextrins and maltodextrins, more preferably dry glucose syrups, and more preferably dry glucose syrups with a dextrose equivalent value of DE = 5 to less than 100, such as DE = 60 to less than 100, such as DE = 60-99, such as DE = 85-99, such as DE = 95-99.

In a further preferred embodiment, the carbohydrate is dextrose and/or one or more carbohydrate component having a DE value of ≥ 60, in particular 60 to 100, more particular 85 to 100.

The term "dextrose" as used in this application is defined to encompass glucose and the hydrates thereof.

In a further preferred embodiment, the carbohydrate is selected from hexoses, in particular allose, altrose, glucose, mannose, gulose, idose, galactose, talose, psicose, fructose, sorbose and/or tagatose; and/or pentoses, in particular arabinose, lyxose, ribose, xylose, ribulose and/or xylulose; and/or tetroses, in particular erythrose, threose, and/or erythrulose.

In a further preferred embodiment, the carbohydrate is one or more carbohydrate components selected from the group consisting of hexose, such as dextrose, fructose, pentose such as xylose, and/or sucrose, dry glucose syrup, dextrin or maltodextrin.

Since the carbohydrates of component (ii) are comparatively inexpensive compounds and are produced from renewable resources, the inclusion of high amounts of component (ii) in the binder according to the present invention allows the production of a binder for mineral wool which is advantageous under economic aspects and at the same time allows the production of an ecological non-toxic binder.

### Component (iii) of the binder

In a preferred embodiment, the solid state binder composition according to the present invention further comprises a component (iii) in form of one or more amines selected from the group of piperazine, polyamines such as hexamethylenediamine, m-xylylenediamine, diethylenetriamine, triethylenetetramine, tetraethylenepentamine and/or monoethanolamine, diethanolamine, and/or triethanolamine and salts thereof.

### Weight ratios of the components of the solid state binder composition

In a preferred embodiment, the proportion of components (i), (ii) and (iii) is within the range of 1 to 50 weight-% component (i) based on the mass of components (i) and (ii), 50 to 99 weight-% component (ii) based on the mass of components (i) and (ii), and 0.1 to 10.0 molar equivalents of component (iii) relative to component (i).

### Component (iv) of the binder

In a preferred embodiment, the binder composition according to the present invention further comprises a component (iv) in form of a carboxylic acid, such as a monomeric mono-, di-, tri-, and polycarboxylic acid, preferably citric acid.

In a preferred embodiment the component (iv) is selected from monomeric polycarboxylic acids, polymeric polycarboxylic acids, monomeric monocarboxylic acids, and/or polymeric monocarboxylic acid, such as polyacrylic acid.

In a particular preferred embodiment, component (iv) is citric acid.

In a preferred embodiment, the proportion of components (i), (ii) and (iv) is within the range of 1 to 50 weight-% component (i) based on the mass of components (i) and (ii), 50 to 99 weight-% component (ii) based on the mass of components (i) and (ii), 3 to 30 wt.-%, in particular 5 to 25 wt.-%, more particular 8 to 20 wt.-% (iv) based on the mass of component (ii).

The citric acid may advantageously be added as ammonium salt of citric acid, such as triammonium citrate.

### Component (v) of the binder

In a preferred embodiment, the binder composition according to the present invention further comprises a component (v) selected from ammonium sulfate salts, ammonium sulfamate salts, ammonium phosphate salts, ammonium nitrate salts, ammonium carbonate salts and/or salts of sulfuric acid, nitric acid, boric acid, hypophosphorous acid, such as sodium hypophosphite, ammonium hypophoshite and/or phosphoric acid.

In a particularly preferred embodiment, the component (v) is preferably present in an amount of 0.05 to 10 weight-%, such as 1 to 7 weight-%, based on the mass of components (i), and (ii), whereby component (iii) is preferably present in the amount of 0.1 to 10 molar equivalents of component (iii) relative to the combined molar equivalents of component (i) and component (v).

Ammonium sulfate salts may include (NH₄)₂SO₄, (NH₄)HSO₄ and (NH₄)₂Fe(SO₄)₂·6H₂O. Ammonium carbonate salts may include (NH₄)₂CO₃ and NH₄HCO₃. Ammonium phosphate salts may include H(NH₄)₂PO₄, NH₄H₂PO₄ and ammonium polyphosphate.

### Component (vi) of the binder

In a further embodiment, the binder composition according to the present invention further comprises a component (vi) in form of urea, preferably in an amount of 0 to 40 weight-%, preferably 0 to 20 weight-% urea, based on the mass of components (i), and (ii).

The inclusion of urea in the binder according to aspects of the present invention improves the fire resistance properties.

### Further components

In a preferred embodiment, other components such as one or more reactive or nonreactive silicones may be added to the binder composition of the present invention. Preferably, the one or more reactive or nonreactive silicone is selected from the group consisting of silicone constituted of a main chain composed of organosiloxane residues, especially diphenylsiloxane residues, alkylsiloxane residues, preferably dimethylsiloxane residues, bearing at least one hydroxyl, carboxyl or anhydride, amine, epoxy or vinyl functional group capable of reacting with at least one of the constituents of the binder composition and is preferably present in an amount of 0.1-15 weight-%, preferably from 0.1-10 weight-%, more preferably 0.3-8 weight-%, based on the total binder mass.

In one embodiment, a silane may be added to the binder composition of the present invention.

Optionally, an emulsified hydrocarbon oil may be added to the binder composition according to the present invention

### Method according to the present invention

The present invention is also directed to a method of producing a bonded mineral fibre product which comprises the steps of contacting mineral fibres with a binder composition described above and curing the binder composition.

In a preferred embodiment, the curing of the binder composition in contact with the mineral fibers takes place in a heat press.

The curing of a binder composition in contact with the mineral fibers in a heat press has the particular advantage that it enables the production of high-density products. The binder composition according to the present invention is particularly suitable for use in such a method because it is a solid state binder and therefore the evaporation of the solution water is avoided.

Preferably, the curing of the binder composition in contact with the mineral fibers takes place in a heat press of 160 to 260 °C, in particular 180 to 250 °C, in particular 200 to 230 °C.

The temperatures above are the set temperature of the heat press.

There are several ways to prepare the solid state binder according to the present invention from the starting compounds.

In a preferred embodiment, the binder contacted with the mineral fibres is prepared by dry mixing of the constituents wherein the average water content of the constituents, calculated as the weight of water in relation to the weight of the total solid state binder, is ≤ 30%, in particular ≤ 25%, more preferably ≤ 10%.

In an alternative preferred embodiment, the binder contacted with the mineral fibres is prepared by dissolving all constituents in water followed by evaporating the water forming a powder.

A preferred method of evaporating the water to form a powder involves the use of spray drying the binder.

In a preferred embodiment, the method according to the present invention can be carried out so that no prepolymerisation of the monomers in the binder takes place before application of the binder.

This is a further advantage over prior art binders which do need such a prepolymerisation of the monomers before application of the binder.

### Mineral fibre product according to the present invention

The present invention is also directed to a mineral fibre product, comprising mineral fibres in contact with the cured binder composition described above. The mineral fibres employed may be any of man-made vitreous fibres (MMVF), glass fibres, ceramic fibres, basalt fibres, slag fibres, rock fibres, stone fibres and others. These fibres may be present as a wool product, e.g. like a rock wool product.

Suitable fibre formation methods and subsequent production steps for manufacturing the mineral fibre product are those conventional in the art. The mineral fibre products produced, for instance, have the form of woven and nonwoven fabrics, mats, batts, slabs, sheets, plates, strips, rolls, and other shaped articles which find use, for example, as thermal or acoustical insulation materials, vibration damping, construction materials such as window profiles, facade insulation, reinforcing materials for roofing or flooring applications, as filter stock and in other applications.

In accordance with the present invention, it is also possible to produce composite materials by combining the bonded mineral fibre product with suitable composite layers or laminate layers such as, e.g., metal, wood, plaster boards, glass surfacing mats and other woven or non-woven materials.

Although the binder composition according to the present invention is particularly useful for bonding mineral fibres, it may equally be employed in other applications typical for binders and sizing agents, e.g. as a binder for foundry sand, chipboard, glass fibre tissue, cellulosic fibres, non-woven paper products, composites, moulded articles, coatings etc.

In a preferred embodiment, the mineral fiber product according to the present invention has a density of 80 to 1200 kg/m³ in particular 150 to 1000 kg/m³, more preferably 500 to 1000 kg/m³.

Preferably, the mineral fiber product according to the present invention has an ignition loss of 3 to 30 %, in particular 5 to 25 %, more particular 10 to 20 %.

The following examples are intended to further illustrate the invention without limiting the scope.

### Examples

In the following examples, several binders which fall under the definition of the present invention were prepared and compared to binders according to the prior art.

Unless stated otherwise, the following reagents were used as received:

| **Reagent** | **Supplier** | **Form** |
|---|---|---|
| α-D-Glucose, 96%, anhydrous | Sigma-Aldrich, 158968 | Fine powder |
| Ascorbic acid, 99% | Sigma-Aldrich, A92902 | Fine powder |
| Ammonium hypophosphite, ≥97% | Sigma-Aldrich, 04401 | Crystalline |
| Ammonia, 28% aq. | Sigma-Aldrich, 221228 | Liquid |

The mineral fibres used in the Examples were rock fibres with a high-alumina, low-silica / Roxul 1000 Composition.

The binder reaction loss is calculated as the difference in the binder content before and after curing.

### Binder mixing, Method A

The reagents were mixed well and the resulting mixture was milled portion-wise (50-100 g per portion) in a Herzog milling machine (running time: 12 seconds for each portion).

### Binder mixing, Method B

The non-carbohydrate reagent(s) were ground very thoroughly in a mortar. An equal amount of dextrose was then added to the mortar and the resulting mixture was ground very thoroughly. This mixture was then mixed well with the remaining amount of dextrose.

### Binder example, reference binder A

The reference binder was a conventional phenol-formaldehyde resin from Dynea with the trade name Prefere 94 8182U7 including an amine cross-linker.

### Binder example, entry 1, mixing method B

### Ammonium ascorbate

To 28% aq. ammonia (50.0 g, thus efficiently 14.0 g, 0.82 mmol ammonia) stirred at 0°C was added ascorbic acid (100 g, 0.57 mmol) in portions over 10 minutes. The resulting yellowish viscous suspension was stirred at 0 °C for 30 min (pH 8). 28% ammonia (5 mL, thus efficiently 1.3 g, 0.07 mmol ammonia) was added and the mixture was stirred for 15 min at room temperature after which time a yellow viscous solution was obtained (pH 9). Methanol (300 mL) was added slowly and stirring was continued for 15 min (yellowish suspension). Further methanol (100 mL) was added and the resulting precipitates were filtered off and dried *in vacuo,* yielding ammonium ascorbate (94.3 g, 86%) as a pale tan solid.

A mixture of ammonium ascorbate (40.0 g) and ammonium hypophosphite (9.2 g) was ground very thoroughly in a mortar. Dextrose (49.2 g) was added to the mortar and the resulting mixture was ground very thoroughly. This mixture was then mixed well with the remaining amount of dextrose (278.8 g).

The following properties were determined for the binders according to the present invention and the binders according to the prior art, respectively.

### Tile production

The tiles were made by mixing the required amounts of silane-treated mineral wool with binder followed by curing in a heat press. The silane was DS1151 supplied by Degussa. For production of each tile, the mineral wool-binder mixture (approx. 0.8 kg) was transferred into a 40 cm x 40 cm form, evened out and pressed flat. The uncured mineral wool-binder mixture was then transferred carefully to a heat press heated to 230 °C, and the tile was cured until the desired internal temperature of the tile was reached (180-195 °C; tile thickness approx. 0.5-1 cm).

### Tile measurements

The heat press would produce tiles that were approx. 5 mm thick in one side and approx. 1 cm thick in the other side. This allowed for investigation of "thin / high density" samples and "thick / low density" samples from each tile.
Thus, one tile from each test was first cut to 40 cm x 40 cm size and the tile was then cut into samples of 50 mm width. A sample with approx. 5 mm thickness was used to measure thin / high density data while a sample with approx. 10 mm thickness was used to measure thick / low density data. The slabs were broken in a 3 point bending test (velocity bending: 10.0 mm/min; support distance: 140.0 mm for thin / high density slabs, 200.0 mm for thick / low density slabs) on a 3-point bending machine. Loss of ignition was then measured on one of these broken samples. For aging studies, samples from one tile of each test were produced as above. The samples were then aged in an autoclave before measuring.

| **Example** | **A** | **1** | **2** | **3** |
|---|---|---|---|---|
| **Binder composition per weight** | | | | |
| | | | | |
| Dextrose | - | 89 | 89 | 100 |
| | | | | |
| Ammonium ascorbate | - | 11 | 11 | - |
| Ammonium hypophosphite | | 2,5 | 2,5 | - |
| | | | | |

| **Binder mixing** | | | | |
|---|---|---|---|---|
| | | | | |
| Mixing method | - | B | B | A |
| | | | | |

| **Curing data** | | | | |
|---|---|---|---|---|
| | | | | |
| | | | | |
| Final internal temperature (°C) | 180 | 195 | 195 | 195 |
| | | | | |

| **Tile data** | | | | |
|---|---|---|---|---|
| | | | | |
| Average thickness (mm) | 9,6 | 7,4 | 10,9 | 10,0 |
| Average density (kg/m³) | 475 | 566 | 439 | 445 |
| LOI (%) | 15,3 | 11,9 | 12,1 | 24,2 |
| Reaction loss (%) | 12% | 34% | 33% | 26% |
| Unaged strength (N/mm²) | 3,5 | 1,6 | 0,5 | 0,5 |
| Aged strength (N/mm²) | 3,1 | 1,3 | 0.5 | -^{a} |

| | | | | |
|---|---|---|---|---|
| ^{a} Strength too low to be measured in the apparatus. | | | | |

## Claims

1. A solid state binder composition, wherein the binder comprises a component (i) in form of one or more compounds selected from compounds of the formula, and any salts thereof, such as ammonium salts and/or amine salts thereof: 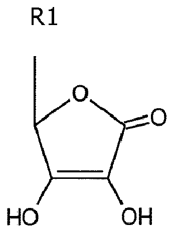 in which R1 corresponds to H, alkyl, monohydroxyalkyl, dihydroxyalkyl, polyhydroxyalkyl, alkylene, alkoxy, amine;
compounds of the formula, and any salts thereof, such as ammonium salts and/or amine salts thereof: 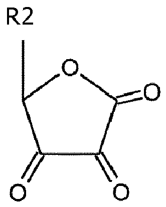 in which R2 corresponds to H, alkyl, monohydroxyalkyl, dihydroxyalkyl, polyhydroxyalkyl, alkylene, alkoxy, amine;
a component (ii) in the form of one or more carbohydrates.

2. A solid state binder composition according to claim 1, wherein the water content, calculated as the weight of water in relation to the weight of the total solid state binder, is ≤ 30 %, in particular ≤ 25 %, more preferably ≤ 10 %.

3. A solid state binder composition according to any one of the preceding claims, wherein 50 wt. % of the components of the solid state binder has a particle size of less than 500 µ, such as less than 200 µ, such as less than 100 µ and more than 10 µ, such as more than 20 µ, such as more than 25 µ.

4. A solid state binder composition according to any one of the preceding claims, wherein the component (i) is selected from the group of L-ascorbic acid, D-isoascorbic acid, 5,6-isopropylidene ascorbic acid, dehydroascorbic acid and/or any salt of the compounds, preferably ammonium salts and/or amine salts and/or calcium, sodium, potassium, magnesium or iron salts.

5. A solid state binder composition according to any one of the preceding claims, wherein the component (i) is in form of one or more of ammonium salts, piperazinium salts, polyamine salts such as hexadimethylenediamine salts, m-xylylenediamine salts, diethylenetriamine salts, triethylenetetramine salts, tetraethylenepentamine salts, and/or monoethanolamine salts, diethanolamine salts and/or triethanolamine salts.

6. A solid state binder composition according to any one of the preceding claims, wherein the component (ii) is one or more carbohydrate component selected from the group consisting of hexose, such as dextrose, fructose, pentose such as xylose and/or sucrose, dry glucose syrup, dextrin or maltodextrin.

7. A solid state binder composition according to any one of the preceding claims, wherein the solid state binder composition further comprises a component (iii) in form of one or more amines, such as piperazine, polyamine such as hexamethylenediamine, m-xylylenediamine, diethylenetriamine, triethylenetetramine, tetraethylenepentamine, monoethanolamine, diethanolamine, triethanolamine and salts thereof.

8. A solid state binder composition according to any one of the preceding claims, wherein the solid state binder composition further comprises a component (iv) in form of a carboxylic acid, such as a monomeric mono-, di-, tri-, and polycarboxylic acid, preferably citric acid.

9. A solid state binder composition according to any one of the preceding claims, wherein the solid state binder composition further comprises a component (v) selected from ammonium sulfate salts, ammonium sulfamate salts, ammonium phosphate salts, ammonium nitrate salts, ammonium carbonate salts and/or salts of sulfuric acid, nitric acid, boric acid, hypophosphorous acid, such as sodium hypophosphite, ammonium hypophoshite and/or phosphoric acid.

10. A method of producing a bonded mineral fiber product which comprises the steps of contacting the mineral fibers with a binder composition according to any one of the claims 1 to 9, and curing the binder composition.

11. A method according to claim 10, wherein the curing of the binder composition in contact with the mineral fibers takes place in a heat press.

12. A method according to claim 11, wherein the curing of the binder composition in contact with the mineral fibers takes place in a heat press of 160 to 260 °C, in particular 180 to 250 °C, in particular 200 to 230 °C.

13. A method according to any of the claims 10 to 12, wherein the binder contacted with the mineral fibres is prepared by mixing of the constituents wherein the average water content of the constituents, calculated as the weight of water in relation to the weight of the total solid state binder, is ≤ 30%, in particular ≤ 25%, more preferably ≤ 10%.

14. A method according to any of the claims 10 to 13, wherein the binder contacted with the mineral fibres is prepared by dissolving all constituents in water followed by evaporating the water forming a powder.

15. A method according to any of the claims 10 to 14, wherein no prepolymerisation of the monomers in the binder takes place before application of the binder.

16. A mineral fiber product, comprising mineral fibers in contact with the cured binder composition according to any one of the claims 1 to 9.

17. A mineral fiber product according to claim 16 having a density of 80-1200 kg/m³,in particular 150 to 1000 kg/m³, more preferably 500 to 1000 kg/m³.

18. A mineral fiber product according to claim 16 or 17, wherein the mineral fiber product has an ignition loss of 3 to 30 %, in particular 5 to 25 %, more particular 10 to 20 %.
